(19) Europäisches Patentamt
European Patent Office
Office européen des brevets

(11) **EP 2 643 378 B1**

(12) **EUROPÄISCHE PATENTSCHRIFT**

(45) Veröffentlichungstag und Bekanntmachung des Hinweises auf die Patenterteilung:
**08.10.2014 Patentblatt 2014/41**

(21) Anmeldenummer: **11784512.3**

(22) Anmeldetag: **18.11.2011**

(51) Int Cl.:
***C08G 18/36*** *(2006.01)*          ***C08G 18/40*** *(2006.01)*
***C08G 18/42*** *(2006.01)*

(86) Internationale Anmeldenummer:
**PCT/EP2011/070478**

(87) Internationale Veröffentlichungsnummer:
**WO 2012/069384 (31.05.2012 Gazette 2012/22)**

(54) **VERFAHREN ZUR HERSTELLUNG VON POLYURETHANWEICHSCHAUMSTOFFEN**

METHOD FOR PRODUCING FLEXIBLE POLYURETHANE FOAMS

PROCÉDÉ DE FABRICATION DE MOUSSES SOUPLES DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2010 EP 10192092**

(43) Veröffentlichungstag der Anmeldung:
**02.10.2013 Patentblatt 2013/40**

(73) Patentinhaber: **Bayer Intellectual Property GmbH 40789 Monheim am Rhein (DE)**

(72) Erfinder:
• **KLESCZEWSKI, Bert**
  **51069 Köln (DE)**
• **JACOBS, Gundolf**
  **51503 Rösrath (DE)**
• **MEYER-AHRENS, Sven**
  **51375 Leverkusen (DE)**
• **NEFZGER, Hartmut**
  **50259 Pulheim (DE)**

(74) Vertreter: **BIP Patents c/o Bayer Intellectual Property GmbH Creative Campus Monheim Alfred-Nobel-Straße 10 40789 Monheim (DE)**

(56) Entgegenhaltungen:
**EP-A1- 1 178 060      US-A1- 2006 264 524**
**US-B1- 6 210 523**

• **ZORAN S PETROVIC ET AL: "Polyester Polyols and Polyurethanes from Ricinoleic Acid", JOURNAL OF APPLIED POLYMER SCIENCE, JOHN WILEY AND SONS INC. NEW YORK, US, Bd. 108, 15. April 2008 (2008-04-15), Seiten 1184-1190, XP002623190, ISSN: 0021-8995, DOI: DOI:10.1002/APP.27783 [gefunden am 2008-01-23]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung von Polyurethanweichschaumstoffen, wobei als Ausgangsstoff eine Polyolkomponente (Komponente A) eingesetzt wird, die Polyricinolsäureester enthält. Die erfindungsgemäßen Polyurethanweichschaumstoffe weisen eine Rohdichte gemäß DIN EN ISO 3386-1-98 im Bereich von $\geq 10\ kg/m^3$ bis $\leq 150\ kg/m^3$, vorzugsweise von $\geq 20\ kg/m^3$ bis $\leq 70\ kg/m^3$ auf und im allgemeinen liegt deren Stauchhärte gemäß DIN EN ISO 3386-1-98 im Bereich von $\geq 0,5\ kPa$ bis $\leq 20\ kPa$ (bei 40% Verformung und 4. Zyklus). Die Polyricinolsäureester sind erhältlich durch Reaktion von Ricinolsäure mit einer Alkoholkomponente, welche ein- und/oder mehrwertige Alkohole mit einer Molekülmasse von $\geq 32\ g/mol$ bis $\leq 400\ g/mol$ umfasst und wobei die Reaktion zumindest teilweise in Gegenwart eines Katalysators durchgeführt wird.

Polyricinolsäureester werden technisch durch Polykondensation der monomeren Ricinolsäure und Alkoholkomponente erhalten. Diese Reaktion verläuft im Vergleich zur Veresterung von beispielsweise Adipinsäure und di-primären Hydroxylkomponenten langsam und ist daher nachteilig. Zum Ausgleich der stoffbedingten Minderfunktionalität an Hydroxylgruppen kann bei der Synthese der Polyricinolsäureester als weitere Komponente ein niedermolekulares Polyol zugesetzt werden, um letztlich den Überschuss an Hydroxyl- über die Carboxylgruppen sicherzustellen.

Gegenwärtig werden im technischen Maßstab bei der Synthese eines Polyricinolats aus Ricinolsäure und einem niedermolekularen Polyol Kesselstandzeiten von teilweise mehr als 80 Stunden benötigt, um ein Produkt mit einer Säurezahl von weniger als 5 mg KOH/g und einer Hydroxylzahl im Bereich von 30 bis 80 mg KOH/g zu erhalten. Eine Herstellung von Polyricinolsäureestern wird beispielsweise in EP 0 180 749 A1 beschrieben. Diese Patentanmeldung betrifft ein Verfahren zur Herstellung von gegebenenfalls mikrozellulären, elastomeren Formkörpern mit selbsttragenden Eigenschaften. Hierbei wird in geschlossenen Formen ein Reaktionsgemisch aus organischen Polyisocyanaten und Lösungen von Kettenverlängerungsmitteln des Molekulargewichtsbereichs von 62 bis 400 in höhermolekularen Polyhydroxylverbindungen des Molekulargewichtsbereichs von 1800 bis 12000 unter Mitwirkung von Katalysatoren, inneren Formtrennmitteln und gegebenenfalls weiterer Hilfs- und Zusatzstoffen umgesetzt. Hier behandelte innere Formtrennmittel sind Estergruppen aufweisende Kondensationsprodukte des Molekulargewichtsbereichs von 900 bis 4500, einer Säurezahl von weniger als 5 mg KOH/g und einer Hydroxylzahl von 12,5 bis 125 mg KOH/g aus 3 bis 15 Mol Ricinolsäure und einem Mol eines ein- oder mehrwertigen Alkohols des Molekulargewichtbereichs von 32 bis 400 oder insgesamt einem Mol eines Gemischs mehrerer derartiger Alkohole.

Aufgabe der vorliegenden Erfindung war es, ein Verfahren zur Herstellung von Polyurethanweichschaumstoffen bereitzustellen, wobei die Polyolkomponente ein auf nachwachsenden Rohstoffen basierendes Polyol enthält. Aus ökologischen Gründen wäre es vorteilhaft, wenn ausgehend von einer Polyolkomponente basierend auf konventionellem Polyetherpolyol bis zu 50 Gcw.-Tle des Polyetherpolyols durch auf nachwachsenden Rohstoffen basierendes Polyol ausgetauscht werden kann, ohne dass die Rezeptur zur Herstellung des Polyurethanweichschaumstoffs darauf angepasst werden muss, um vergleichbare Verarbeitbarkeit zu erreichen. Auch sollten die daraus hergestellten Schäume bezüglich ihrer Stauchhärte und Zugeigenschaften mit konventionellen Schäumen vergleichbar sein.

Überraschend wurde gefunden, dass die zuvor genannte Aufgabe gelöst wird durch ein Verfahren zur Herstellung von Polyurethanweichschaumstoffen mit einer Rohdichte gemäß DIN EN ISO 3386-1-98 im Bereich von $\geq 10\ kg/m^3$ bis $\leq 150\ kg/m^3$, vorzugsweise von $\geq 20\ kg/m^3$ bis $\leq 70\ kg/m^3$ und einer Stauchhärte gemäß DIN EN ISO 3386-1-98 im Bereich von $\geq 0,5\ kPa$ bis $\leq 20\ kPa$ (bei 40% Verformung und 4. Zyklus) durch Umsetzung von Komponente A (Polyolformulierung) enthaltend

A1    50 bis 95 Gew.-Teile, bevorzugt 50 bis 80 Gew.-Teile (bezogen auf die Summe der Gew.-Teile der Komponenten A1 und A2) konventionelles Polyetherpolyol,

A2    5 bis 50 Gew.-Teile, bevorzugt 20 bis 50 Gew.-Teile (bezogen auf die Summe der Gew.-Teile der Komponenten A1 und A2) Polyricinolsäureester mit einer Hydroxylzahl von 30 mg KOH/g bis 80 mg KOH/g und einer Säurezahl von weniger als 5 mg KOH/g,

A3    0,5 bis 25 Gew.-Teile, bevorzugt 2 bis 5 Gew.-Teile (bezogen auf die Summe der Gew.-Teile der Komponenten A1 und A2) Wasser und/oder physikalische Treibmittel,

A4    0,05 bis 10 Gew.-Teile, bevorzugt 0,2 bis 4 Gew.-Teile (bezogen auf die Summe der Gew.-Teile der Komponenten A1 und A2) Hilfs- und Zusatzstoffe wie

a) Katalysatoren,

b) oberflächenaktive Zusatzstoffe,

c) Pigmente oder Flammschutzmittel,

A5    0 bis 10 Gew.-Teile, bevorzugt 0 bis 5 Gew.-Teile (bezogen auf die Summe der Gew.-Teile der Komponenten A1 und A2) gegenüber Isocyanaten reaktionsfähigen Wasserstoffatomen aufweisenden Verbindungen mit einem Molekulargewicht von 62 - 399,

mit Komponente B enthaltend Polyisocyanate,

wobei die Herstellung bei einer Kennzahl von 50 bis 250, bevorzugt 70 bis 130, besonders bevorzugt 75 bis 115 erfolgt, und wobei alle Gewichtsteilangaben der Komponenten A1 bis A5 in der vorliegenden Anmeldung so normiert sind, dass die Summe der Gewichtsteile der Komponenten A1+A2 in der Zusammensetzung 100 ergibt.

Komponente A1

Ausgangskomponenten gemäß Komponente A1 sind konventionelle Polyetherpolyole. Unter konventionellen Polyetherpolyolen im Sinne der Erfindung werden Verbindungen bezeichnet, die Alkylenoxidadditionsprodukte von Starterverbindungen mit zerewitinoff-aktiven Wasserstoffatomen, also Polyetherpolyole mit einer Hydroxylzahl gemäß DIN 53240 von $\geq$ 15 mg KOH/g bis $\leq$ 80 mg KOH/g, vorzugsweise von $\geq$ 20 mg KOH/g bis $\leq$ 60 mg KOH/g sind.

Für die konventionellen Polyetherpolyole eingesetzte Starterverbindungen mit zerewitinoff-aktiven Wasserstoffatomen weisen meist Funktionalitäten von 2 bis 6 auf, vorzugsweise von 3, und vorzugsweise sind die Starterverbindungen hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Do-decandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff,. Vorzugsweise wird als Starterverbindung Glycerin und/oder Trimethylolpropan eingesetzt.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Komponente A2

Die eingesetzten Polyricinolsäureester werden durch Polykondensation der Ricinolsäure und ein- oder mehrwertigen Alkohole erhalten, wobei die Polykondensation vorzugsweise in Gegenwart eines Katalysators erfolgt. Im Verfahren zur Herstellung der Polyricinolsäureester liegt die Menge des Katalysators, bezogen auf die Gesamtmasse der Ricinolsäure und der Alkoholkomponente, beispielsweise in einem Bereich von $\geq$ 10 ppm bis $\leq$ 100 ppm. Die eingesetzten Polyricinolsäureester weisen eine Säurezahl von weniger als 5 mg KOH/g, bevorzugt von weniger als 4 mg KOH/g auf. Dies kann dadurch erreicht werden, indem die Polykondensation beendet wird, wenn die Säurezahl des erhaltenen Reaktionsproduktes weniger als 5 mg KOH/g, bevorzugt weniger als 4 mg KOH/g beträgt.

Geeignete ein- oder mehrwertige Alkohole können, ohne hierauf beschränkt zu sein, Alkanole, Cycloalkanole und/oder Polyetheralkohole sein. Beispiele sind n-Hexanol, n-Dodecanol, n-Octadecanol, Cyclohexanol, 1,4-Dihydroxycyclohexan, 1,3-Propandiol, 2-Methylpropandiol-1,3, 1,5-Pentandiol, 1,6-Hexandiol, 1,8-Octandiol, Neopentylglykol, Diethylenglykol, Triethylenglykol, Tetraethylenglykol, Dipropylenglykol, Tripropylenglykol, Dibutylenglykol, Tripropylenglykol, Glycerin und/oder Trimethylolpropan. Bevorzugt sind hierbei 1,3-Propandiol, 1,5-Pentandiol, 1,6-Hexandiol, Neopentylglykol, Diethylenglykol, Triethylenglykol, und/oder Trimethylolpropan. Die genannten Alkohole weisen Siedepunkte auf, bei denen ein Austragen zusammen mit Reaktionswasser vermieden werden kann und neigen bei den üblichen Reaktionstemperaturen auch nicht zu unerwünschten Nebenreaktionen.

Geeignete Katalysatoren beziehungsweise Katalysatorvorstufen können Lewis- oder Brönstedt-Säuren wie zum Beispiel Schwefelsäure, p-Toluolsulfonsäure, Zinn(II)-Salze oder Titan(IV)-Verbindungen wie Titantetrabutylat oder Titan(IV)alkoholate.

Zur Berechnung des Katalysatorgehalts wird im Fall von Brönstedt-Säuren von der Neutralverbindung ausgegangen. Zum Beispiel wird bei Schwefelsäure das Molekül $H_2SO_4$ zugrunde gelegt. Ist der Katalysator eine Lewis-Säure, so wird die katalytisch aktive kationische Spezies herangezogen. Beispielsweise würde im Fall von Zinn(II)-Salzen unabhängig von dem jeweiligen Gegenion nur das $Sn^{2+}$-Kation oder im Fall von Titan(IV)-Verbindungen nur das $Ti^{4+}$-Kation berücksichtig werden. Diese Herangehensweise ist vorteilhaft, da der Gehalt an metallischen Spezies mittels Atomabsorptions- (AAS-)Spektroskopie bestimmt werden kann, ohne das jeweilige Gegenion kennen zu müssen.

Der Anteil des Katalysators kann, bezogen auf die Gesamtmasse der Ricinolsäure und der Alkoholkomponente, auch in einem Bereich von $\geq$ 20 ppm bis $\leq$ 80 ppm, bevorzugt von $\geq$ 40 ppm bis $\leq$ 60 ppm liegen.

Die Reaktion kann bei verringertem Druck und erhöhter Temperatur bei gleichzeitigem Abdestillieren des bei der Kondensationsreaktion entstehenden Wassers durchgeführt werden. Ebenso kann sie nach dem Azeotrop-Verfahren in Gegenwart eines organischen Lösungsmittels wie Toluol als Schleppmittel oder nach dem Trägergas-Verfahren, also durch Austreiben des entstehenden Wassers mit einem inerten Gas wie Stickstoff oder Kohlendioxid erfolgen.

Die Reaktion wird beendet, wenn die Säurezahl des erhaltenen Reaktionsproduktes weniger als 5 mg KOH/g, vorzugsweise weniger als 4 mg KOH/g beträgt. Dieser Wert kann nach DIN 53402 bestimmt und während der Reaktion beispielsweise durch Probenentnahme ermittelt werden. Das Beenden der Reaktion kann im einfachsten Falle durch Abkühlen des Reaktionsansatzes, beispielsweise auf eine Temperatur < 50°C, erfolgen.

Das molare Verhältnis von Ricinolsäure und der Alkoholkomponente liegt vorzugsweise in einem Bereich von ≥ 3:1 bis ≤ 10:1. Besonders bevorzugt beträgt dieses Verhältnis ≥ 4:1 bis ≤ 8:1 und mehr bevorzugt ≥ 5: bis ≤ 7:1.

Überraschend wurde gefunden, dass sich die Polyricinolsäureester in besonderem Maße in Polyurethanweichschaum-Rezepturen einarbeiten lassen, ohne die Rezepturen, die keinen Bestandteil gemäß Komponente A2 enthielten, durch die Mitverwendung der Komponente A2 (Polyricinolsäureester) grundlegend verändern zu müssen, d.h. die Verarbeitbarkeit und die Qualität der resultierenden Polyurethanweichschaumstoffe liegen auf einem vergleichbaren Niveau.

Das Verfahren umfasst bevorzugt als Katalysator Zinn(II)-Salze. Besonders bevorzugt ist hierbei Zinn(II)-Chlorid. Es hat sich herausgestellt, dass Zinn(II)-Salze in einer nachfolgenden Umsetzung des Polyricinolsäureesters zu Polyurethanen nicht stören oder aber auch vorteilhaft als Katalysator in dieser Folgereaktion eingesetzt werden können.

Die Reaktionstemperatur bei der Polykondensation beträgt bevorzugt ≥ 150°C bis ≤ 250°C. Die Temperatur kann auch in einem Bereich von ≥ 180 °C bis ≤ 230 °C und mehr bevorzugt ≥ 190 °C bis ≤ 210 °C liegen. Diese Temperaturbereiche stellen eine gute Abwägung zwischen der gewünschten Reaktionsgeschwindigkeit und möglichen unerwünschten Nebenreaktionen wie beispielsweise der Wassereliminierung an der OH-Gruppe der Ricinolsäure dar.

In einer bevorzugten Ausführungsform des Verfahrens werden zunächst Ricinolsäure und die Alkoholkomponente ohne Katalysator zur Reaktion gebracht. Der Katalysator wird dann hinzugefügt, wenn die Wasserbildungsreaktion zum Erliegen gekommen ist. Anschließend wird die Reaktion katalysiert weiter durchgeführt. Dass die Reaktion zunächst ohne Katalysator abläuft, bedeutet, dass kein zusätzlicher externer Katalysator eingesetzt wird. Hiervon unberührt bleibt eine Katalyse durch die Bestandteile der Reaktionsmischung Ricinolsäure und ein- oder mehrwertige Alkohole selbst. Gegenstand der Erfindung ist somit auch ein Verfahren zur Herstellung der erfindungsgemäßen Polyurethanweichschaumstoffen, wobei der Polyricinolsäureester erhältlich ist durch Polykondensation der Ricinolsäure und der Alkoholkomponente ohne Katalysator bei einer Temperatur von ≥ 150 °C bis ≤ 250 °C bis die Wasserbildungsreaktion zum Erliegen gekommen ist, anschließendes hinzufügen des Katalysators und weitere Polykondensation bei einer Temperatur von ≥ 150 °C bis ≤ 250 °C und Abdestillation des entstehenden Wassers, bis die Säurezahl des Reaktionsgemisches (Polyricinolsäureester) weniger als 5 mg KOH/g, bevorzugt von weniger als 4 mg KOH/g beträgt.

Die Wasserbildung wird als zum Erliegen gekommen angesehen, wenn nach optischer Kontrolle der Reaktion kein Wasser mehr abdestilliert oder wenn mehr als 95% der theoretischen Menge an Wasser der Reaktion entzogen wurden. Dieses lässt sich beispielsweise durch eine entsprechend ausgerüstete Destillationsvorlage, eine Dean-Stark-Apparatur oder durch Gewichtskontrolle des gebildeten Destillates bestimmen. Zur Bestimmung des Endes der Wasserbildung kann auch beispielsweise das Absorptionsverhalten von COOH- und/oder OH-Gruppen im NIR-Bereich spektroskopisch verfolgt werden. Dann kann die Reaktion bis zu vorher ermittelten Absorptionswerten vervollständigt werden.

Dass die Reaktion nach Zugabe des Katalysators katalysiert weiter durchgeführt wird, meint in diesem Zusammenhang die Katalyse durch hinzugefügten externen Katalysator. Gemäß dieser Ausführungsform kann ein hydrolyseanfälliger Katalysator, etwa Titan(IV)-Alkoholate, erst zu einem späten Zeitpunkt, an dem mindestens der Großteil des Reaktionswassers bereits abgetrennt ist, eingesetzt werden. Hierdurch wird die Reaktionszeit nicht negativ beeinflusst, da die Veresterungsreaktion im Anfangsstadium durch die freien COOH-Gruppen der Ricinolsäureeinheiten autokatalysiert verläuft und Katalysator erst dann eingebracht wird, wenn das Reaktionsgemisch beginnt, an COOH-Gruppen zu verarmen.

Zur Berechnung des Katalysatorgehalts im wird im Fall von Brönstedt-Säuren von der Neutralverbindung ausgegangen. Zum Beispiel wird bei Schwefelsäure das Molekül $H_2SO_4$ zugrunde gelegt. Ist der Katalysator eine Lewis-Säure, so wird die katalytisch aktive kationische Spezies herangezogen. Beispielsweise würde im Fall von Zinn(II)-Salzen unabhängig von dem jeweiligen Gegenion nur das $Sn^{2+}$-Kation oder im Fall von Ti(IV)-Verbindungen nur das $Ti^{4+}$-Kation berücksichtig werden. Diese Herangehensweise ist vorteilhaft, da der Gehalt an metallischen Spezies mittels Atomabsorptions- (AAS-)Spektroskopie bestimmt werden kann, ohne das jeweilige Gegenion kennen zu müssen. Die als Komponente A2 eingesetzten Polyricinolsäureesters weisen in der Regel einen Katalysatorgehalt von ≥ 20 ppm bis ≤ 80 ppm auf. Der Gehalt kann auch in einem Bereich von ≥ 40 ppm bis ≤ 60 ppm liegen.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesodere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

α) Harnstoff, Derivate des Harnstoffs und/oder

β) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

Komponente A5

Gegebenenfalls werden als Komponente A5 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A5 Ethanolamin, Diethanolamin, Triethanolamin, Sorbit und/oder Glycerin eingesetzt werden. Weitere Beispiele für Verbindungen gemäß Komponente A5 werden in EP-A 0 007 502, Seiten 16 - 17, beschrieben.

Komponente B

Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (I)

$$Q(NCO)_n, \qquad (I)$$

in der

n = 2 - 4, vorzugsweise 2 -3,

und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seite 7 - 8, be-

schrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'- Diphenylmethandiisocyanat, 2,4'-Diphenylmethandiisocyanat und Polyphenylpolymethylenpolyisocyanat eingesetzt.

Zur Herstellung der Polyurethanweichschaumstoffe werde die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanweichschaumstoffe können als Form- oder auch als Blockschaumstoffe hergestellt werden. Gegenstand der Erfindung sind daher ein Verfahren zur Herstellung der Polyurethanweichschaumstoffe, die nach diesen Verfahren hergestellten Polyurethanweichschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst. Die nach der Erfindung erhältlichen Polyurethanweichschaumstoffe finden beispielsweise folgende Anwendung: Möbelpolsterungen, Textileinlagen, Matratzen, Automobilsitze, Kopfstützen, Armlehnen, Schwämme und Bauelementen.

Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an IsocyanatGruppen (NCO)-Menge an.

$$\text{Kennzahl} = [(\text{Isocyanat-Menge eingesetzt}) : (\text{Isocyanat-Menge berechnet})] \bullet 100 \quad \text{(II)}$$

Polyurethanweichschaumstoffe in Sinne der vorliegenden Erfindung sind solche Polyurethan-Polymere, deren Rohdichte gemäß DIN EN ISO 3386-1-98 im Bereich von $\geq 10$ kg/m$^3$ bis $\leq 150$ kg/m$^3$, vorzugsweise im Bereich von $\geq 20$ kg/m$^3$ bis $\leq 70$ kg/m$^3$ liegt und deren Stauchhärte gemäß DIN EN ISO 3386-1-98 im Bereich von $\geq 0,5$ kPa bis $\leq 20$ kPa (bei 40% Verformung und 4. Zyklus) liegt.

Beispiele

Die vorliegende Erfindung wird anhand der nachfolgenden Beispiele weiter erläutert. Hierbei haben die verwendeten Materialien und Abkürzungen die folgende Bedeutung und Bezugsquellen:

Ricinolsäure: Oleo Chemie.

Zinn(II)-Chlorid: Aldrich

DABCO® (Triethylendiamin; 2,2,2-Diazabicyclooctan): Aldrich

MDI-1: Mischung enthaltend 62 Gew.-% 4,4'-Diphenylmethandiisocyanat, 8 Gew.-% 2,4'-Diphenylmethandiisocyanat und 30 Gew.-% Polyphenylpolymethylenpolyisocyanat ("Mehrkern-MDI") mit einem NCO-Gehalt von 32,1 Gewichts-%.

MDI-2 Mischung enthaltend 57 Gew.-% 4,4'-Diphenylmethandiisocyanat, 25 Gew.-% 2,4'-Diphenylmethandiisocyanat und 18 Gew.-% Polyphenylpolymethylenpolyisocyanat ("Mehrkern-MDI") mit einem NCO-Gehalt von 32,5 Gewichts-%.

A1-1: Polyetherpolyol mit einer OH-Zahl von ca. 28 mg KOH/g, hergestellt durch Addition von Propylenoxid und Ethylenoxid im Verhältnis 85 zu 15 unter Verwendung von Glycerin als Starter mit ca. 85 mol% primären OH-Gruppen.

A1-2: Polyetherpolyol mit einer OH-Zahl von ca. 37 mg KOH/g, hergestellt durch Addition von Propylenoxid und Ethylenoxid im Verhältnis 27 zu 73 unter Verwendung von Glycerin als Starter mit ca. 83 mol% primären OH-Gruppen.

A2-3: BIOH® 5000, Sojaöl-basiertes Polyol, Hydroxylzahl 50,5 mg KOH/g, Hersteller Cargill GmbH, Hamburg, Deutschland.

(fortgesetzt)

| A4-1 | Tegostab® B 8681, Zubereitung organo-modifizierter Polysiloxane, Firma Evonik Goldschmidt |
| A4-2 | Addocat® 105, Aminkatalysator der Firma Rheinchemie |
| A4-3 | Addocat® 108, Aminkatalysator der Firma Rheinchemie |
| A4-4 | Addocat® SO, Zinnkatalysator der Firma Rheinchemie |
| A4-5 | Tegostab® B 8715LF, Zubereitung organo-modifizierter Polysiloxane, Firma Evonik Goldschmidt |
| A4-6 | Dabco® NE300, Aminkatalysator der Fa. Air Products. |
| A4-7 | Jeffcat® ZR50, Aminkatalysator der Fa. Huntsman Corp. Europe. |
| A5-1 | Diethanolamin |

Die Analysen wurden wie folgt durchgeführt:
Dynamische Viskosität: Rheometer MCR 51 der Firma Anton Paar entsprechend DIN 53019.

| Hydroxylzahl: | anhand der Norm DIN 53240 |
| Säurezahl: | anhand der Norm DIN 53402 |

Die Rohdichte wurde gemäß DIN EN ISO 3386-1-98 bestimmt.

Die Stauchhärte wurde gemäß DIN EN ISO 3386-1-98 (bei 40% Verformung und 4. Zyklus) bestimmt.

Die Druckverformungsreste DVR 50% (Ct) und DVR 75% (Ct) wurden bestimmt gemäß DIN EN ISO 1856-2001-03 bei 50% bzw. 75% Verformung.

Die Zugfestigkeit und Bruchdehnung wurden bestimmt gemäß DIN EN ISO 1798.

Herstellung des Polyricinolats A2-1:

In einen 16000-Liter Rührwerkskessel mit Destillationskolonnen und aufgesetztem Dephlegmator wurden 13000 kg Ricinolsäure und 650 kg Hexandiol eingezogen und unter und Rühren auf 200 °C erhitzt. Während der Aufheizphase wurde Reaktionswasser unter Normaldruck abdestilliert. Bei Erreichen der Reaktionstemperatur wurde Vakuum angelegt. Der Druck wurde innerhalb einer Stunde auf 20 mbar abgesenkt. Währenddessen wurde die Kopftemperatur mittels Regelung der Dephlegmatortemperatur auf dem Niveau der Wassersiedelinie gehalten. Bei einem Druck von 200 mbar gab man nach 3,5 Stunden 320 g einer 28%-igen Lösung an Zinndichlorid (wasserfrei) in Ethylenglykol zu. Gleichzeitig wurde die Dephlegmatortemperatur auf 60 °C fixiert. Im Verlauf der weiteren Reaktion wurde die Säurezahl verfolgt: Die Säurezahl betrug nach einer Reaktionszeit von insgesamt 24 Stunden 10 mg KOH/g, nach 48 Stunden 5 mg KOH/g, nach 72 Stunden 3,5 mg KOH/g und nach 84 Stunden 3,0 mg KOH/g. Nach 84 Stunden Reaktionszeit wurde der Reaktorinhalt auf 130 °C abgekühlt.

Analyse des resultierenden Polyricinolates A2-1:

| Hydroxylzahl: | 37,5 mg KOH/g |
| Säurezahl: | 3,0 mg KOH/g |
| Viskosität: | 850 mPas (25 °C) |
| Katalysatorkonzentration: | 4 ppm Sn im Endprodukt |

Herstellung des Polyricinolats A2-2:

In einem 10-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 7775 g Ricinolsäure (ca. 24 Mol) und 657 g (5,57 Mol) 1,6-Hexandiol vorgelegt und unter Stickstoffüberschleierung im Verlauf von 60 min. auf 200 °C erhitzt, wobei Reaktionswasser abdestilliert wurde. Nach 8 Stunden wurden 480 mg Zinndichloriddihydrat zugegeben und die Umsetzung fortgeführt. Nach einer Reaktionszeit von insgesamt 17 Stunden wurde der Druck im Verlauf von 5 Stunden langsam auf 15 mbar verringert. Im Verlauf der weiteren Reaktion wurde die Säurezahl verfolgt: Nach einer Reaktionszeit von insgesamt 45 Stunden wurde betrug die Säurezahl 7,5 mg KOH/g, nach 76 Stunden 3,0 mg KOH/g, nach 100 Stunden 2,9 mg KOH/g.

Analyse des resultierenden Polyricinolates A2-2:

| | |
|---|---|
| Hydroxylzahl: | 53,3 mg KOH/g |
| Säurezahl: | 2,9 mg KOH/g |
| Viskosität: | 325 mPas (25 °C) bzw. 100 mPas (50 °C) bzw. 45 mPas (75 °C) |
| Katalysatorkonzentration: | 4 ppm Sn im Endprodukt |

B) Herstellung von Polyurethan-Weichblockschaumstoffen

In für die Herstellung von Polyurethanschaumstoffen üblicher Verarbeitungsweise nach dem Einstufenverfahren werden die in den Beispielen der in der nachfolgenden Tabelle 1 aufgeführten Einsatzstoffe miteinander zur Reaktion gebracht.

Tabelle 1: Herstellung und Beurteilung der Polyurethan-Weichblockschaumstoffe

| | | 1 | 2 | 3 | 4 | 5 | 6 | 7 | 8 | 9 | 10 | 11 | 12 | 13 |
|---|---|---|---|---|---|---|---|---|---|---|---|---|---|---|
| | | (Vgl.) | (Vgl.) | (Vgl.) | (Vgl.) | (Vgl.) | (Vgl.) | | | | | | (Vgl.) | |
| A1-1 | [Gew.-Tle] | 92,45 | 87,58 | 82,72 | 77,85 | 48,66 | 97,31 | 92,45 | 87,58 | 82,72 | 77,85 | 48,66 | 29,19 | 77,85 |
| A2-3 | [Gew.-Tle] | 4,87 | 9,73 | 14,60 | 19,46 | 48,66 | 0,00 | | | | | | | |
| A2-2 | [Gew.-Tle] | | | | | | | 4,87 | 9,73 | 14,60 | 19,46 | 48,66 | 68,12 | |
| A2-1 | [Gew.-Tle] | | | | | | | | | | | | | 19,46 |
| Wasser | [Gew.-Tle] | 2,24 | 2,24 | 2,24 | 2,24 | 2,24 | 2,24 | 2,24 | 2,24 | 2,24 | 2,24 | 2,24 | 2,24 | 2,24 |
| A4-1 | [Gew.-Tle] | 0,10 | 0,10 | 0,10 | 0,10 | 0,10 | 0,10 | 0,10 | 0,10 | 0,10 | 0,10 | 0,10 | 0,10 | 0,10 |
| A4-2 | [Gew.-Tle] | 0,16 | 0,16 | 0,16 | 0,16 | 0,16 | 0,16 | 0,16 | 0,16 | 0,16 | 0,16 | 0,16 | 0,16 | 0,16 |
| A4-3 | [Gew.-Tle] | 0,15 | 0,15 | 0,15 | 0,15 | 0,15 | 0,15 | 0,15 | 0,15 | 0,15 | 0,15 | 0,15 | 0,15 | 0,15 |
| A4-4 | [Gew.-Tle] | 0,05 | 0,05 | 0,05 | 0,05 | 0,05 | 0,05 | 0,05 | 0,05 | 0,05 | 0,05 | 0,05 | 0,05 | 0,05 |
| MDI-1 | [MV] | 35,04 | 35,27 | 35,49 | 35,72 | 37,09 | 34,81 | 35,07 | 35,32 | 35,58 | 35,84 | 37,38 | 38,40 | 38,40 |
| Kennzahl | | 90 | 90 | 90 | 90 | 90 | 90 | 90 | 90 | 90 | 90 | 90 | 90 | 90 |
| Startzeit | [s] | 12 | 12 | 14 | 11 | 11 | 12 | 12 | 12 | 12 | 12 | 20 | 20 | 10 |
| Steigzeit | [s] | 127 | 125 | 121 | 112 | | 115 | 120 | 120 | 125 | 125 | 130 | | 120 |
| | | | | | | | | | | | | | | |
| | | | | | | | | | | | | | | |
| Rohdichte | [kg/m$^3$] | 60,2 | 62 | 64,6 | 64,5 | Koll. | 54,4 | 55,2 | 56,7 | 57,1 | 58,4 | 66,1 | Koll. | |
| Zugfestigkeit | [kPa] | 59 | 73 | 74 | 78 | | 48 | 68 | 61 | 73 | 70 | 94 | | |
| Bruchdehnung | [%] | 108 | 115 | 111 | 106 | | 95 | 111 | 104 | 112 | 116 | 95 | | |
| Stauchhärte | [kPa] | 3,92 | 4,71 | 4,32 | 4,98 | | 3,57 | 3,8 | 3,99 | 3,54 | 3,78 | 5,2 | | |
| Abkürzungen: Vgl. = Vergleichsbeispiel; Koll. = Kollaps; Gew.-Tle. = Gewichtsteile; MV = Gewichtsverhältnis der Komponente A zu Komponente B bei der angegeben Kennzahl und bezogen auf 100 Gewichtsteile Komponente A. | | | | | | | | | | | | | | |

EP 2 643 378 B1

Die erfindungsgemäßen Polyurethan-Weichblockschaumstoffe (Beispiele 7 bis 11 und 13), in denen Polyricinolsäureester gemäß Komponente A2 verarbeitet wurden, ließen sich mit ansonsten unveränderter Rezeptur wie der Weichschaumstoff basierend auf rein konventionellem Polyol A1-1 herstellen (Vergleichsbeispiel 6), d.h. hinsichtlich Verarbeitung, Stauchhärte und Zugeigenschaften der resultierenden Weichblockschaumstoffe gab es keine wesentlichen Unterschiede zu Vergleichsbeispiel 6.

C) Herstellung von Polyurethan-Weichformschaumstoffen

In für die Herstellung von Polyurethan-Weichformschaumstoffen üblicher Verarbeitungsweise nach dem Einstufenverfahren werden die in den Beispielen der in der nachfolgenden Tabelle 1 aufgeführten Einsatzstoffe miteinander zur Reaktion gebracht. Das Reaktionsgemisch wird in eine auf 60 bzw. 75°C geheizte Form des Volumens 10 L eingebracht und nach 5 min entformt. Die Einsatzmenge der Rohstoffe wurde so gewählt, dass eine berechnete Formteildichte von etwa 55 kg/m3 resultiert. In der Tabelle 2 angegeben ist die tatsächlich erhaltene Formteildichte, welche nach DIN EN ISO 3386-1-98 bestimmt wurde.

Tabelle 2: Herstellung und Beurteilung der Polyurethan-Weichformschaumstoffe

| | | 14 | 15 | 16 |
|---|---|---|---|---|
| A1-1 | [Gew.-Tle] | 91,77 | 82,31 | 83,57 |
| A1-2 | [Gew.-Tle] | 2,84 | 2,84 | 1,42 |
| A2-1 | [Gew.-Tle] | 0,00 | 9,46 | 0,00 |
| A2-3 | [Gew.-Tle] | 0,00 | 0,00 | 9,44 |
| Wasser | [Gew.-Tle] | 3,03 | 3,03 | 3,02 |
| A4-5 | [Gew.-Tle] | 0,95 | 0,95 | 0,94 |
| A4-6 | [Gew.-Tle] | 0,09 | 0,09 | 0,09 |
| A4-7 | [Gew.-Tle] | 0,38 | 0,38 | 0,38 |
| A5-1 | [Gew.-Tle] | 0,95 | 0,95 | 1,13 |
| MDI-2 | [MV] | 53,2 | 53,2 | 53,8 |
| Kennzahl | | 95 | 95 | 95 |
| Formtemperatur | °C | 60 | 75 | 75 |
| Entformzeit | min | 5 | 5 | 5 |
| Stauchhärte | kPa | 7,58 | 7,14 | 7,47 |
| Rohdichte | kg/m$^3$ | 53,3 | 55,6 | 54,4 |
| Zugfestigkeit | kPa | 133 | 114 | 118 |
| Bruchdehnung | % | 93 | 92 | 87 |
| DVR 50% | Ct(%) | 5,4 | 5,4 | 5,4 |
| DVR 70% | Ct(%) | 6,5 | 6,8 | 8,1 |
| Abkürzungen: Vgl. = Vergleichsbeispiel; Gew.-Tle. = Gewichtsteile; MV = Gewichtsverhältnis der Komponente A zu Komponente B bei der angegeben Kennzahl und bezogen auf 100 Gewichtsteile Komponente A. | | | | |

Der erfindungsgemäße Polyurethan-Weichformschaumstoff (Beispiele 15), in dem Polyricinolsäureester gemäß Komponente A2-1 verarbeitet wurde, lies sich mit ansonsten unveränderter Rezeptur wie der Weichschaumstoff basierend auf rein konventionellem Polyol A1-1 herstellen (Vergleichsbeispiel 14) , d.h. hinsichtlich Verarbeitung und Eigenschaften der resultierenden Weichformschaumstoffe gab es keine wesentlichen Unterschiede zu Vergleichsbeispiel 14. Hingegen musste für die Verarbeitung von einem nicht erfindungsgemäßen, auf nachwachsendem Rochstoff basierenden Polyol A2-3 die Rezeptur angepasst werden, indem durch Verringerung des Anteils an zellöffnend wirkendem Polyol A1-2 und Erhöhung der vernetzend wirkenden Komponente A5-1 der bei der Verarbeitung destabilisierend wirkenden Komponente A2-3 entgegengewirkt wurde.

**Patentansprüche**

1. Verfahren zur Herstellung von Polyurethanweichschaumstoffen mit einer Rohdichte gemäß DIN EN ISO 3386-1-98 im Bereich von $\geq 10$ kg/m$^3$ bis $\leq 150$ kg/m$^3$ und einer Stauchhärte gemäß DIN EN ISO 3386-1-98 im Bereich von $\geq 0,5$ kPa bis $\leq 20$ kPa (bei 40% Verformung und 4. Zyklus) durch Umsetzung von Komponente A enthaltend

   A1    50 bis 95 Gew.-Teile (bezogen auf die Summe der Gew.-Teile der Komponenten A1 und A2) konventionelles Polyetherpolyol,

   A2    5 bis 50 Gew.-Teile (bezogen auf die Summe der Gew.-Teile der Komponenten A1 und A2) Polyricinolsäureester mit einer Hydroxylzahl von 30 mg KOH/g bis 80 mg KOH/g und einer Säurezahl von weniger als 5 mg KOH/g,

   A3    0,5 bis 25 Gew.-Teile (bezogen auf die Summe der Gew.-Teile der Komponenten A1 und A2) Wasser und/oder physikalische Treibmittel,

   A4    0,05 bis 10 Gew.-Teile (bezogen auf die Summe der Gew.-Teile der Komponenten A1 und A2) Hilfs- und Zusatzstoffe wie
         d) Katalysatoren,
         e) oberflächenaktive Zusatzstoffe,
         f) Pigmente oder Flammschutzmittel.

   mit Komponente B enthaltend Polyisocyanate,
   wobei die Herstellung bei einer Kennzahl von 50 bis 250 erfolgt, und wobei alle Gewichtsteilangaben der Komponenten A1 bis A5 in der vorliegenden Anmeldung so normiert sind, dass die Summe der Gewichtsteile der Komponenten A1+A2 in der Zusammensetzung 100 ergibt.

2. Verfahren gemäß Anspruch 1, wobei Komponente A zusätzlich

   A5    0 bis 10 Gew.-Teile (bezogen auf die Summe der Gew.-Teile der Komponenten A1 und A2) gegenüber Isocyanaten reaktionsfähigen Wasserstoffatomen aufweisenden Verbindungen mit einem Molekulargewicht von 62 - 399 enthalten kann.

3. Verfahren gemäß Anspruch 1 oder 2, wobei als konventionelles Polyetherpolyol ein oder mehrere Alkylenoxidadditionsprodukte von Starterverbindungen mit zerewitinoff-aktiven Wasserstoffatomen eingesetzt werden.

4. Verfahren gemäß Anspruch 1 oder 2, wobei als konventionelles Polyetherpolyol ein oder mehrere Alkylenoxidadditionsprodukte erhältlich durch Umsetzung von mindestens einer Starterverbindung ausgewählt aus der Gruppe bestehend aus Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol und methylolgruppenhaltige Kondensate aus Formaldehyd und Phenol, methylolgruppenhaltige Kondensate aus Formaldehyd Melamin, methylolgruppenhaltige Kondensate aus Formaldehyd und Harnstoff, mit mindestens einem Alkylenoxid ausgewählt aus der Gruppe bestehend aus Ethylenoxid, Propylenoxid, 1,2-Butylenoxid,. 2,3-Butylenoxid und Styroloxid eingesetzt werden.

5. Verfahren gemäß einem der Ansprüche 1 bis 4, wobei der Polyricinolsäureester durch Polykondensation der Ricinolsäure und ein- oder mehrwertigen Alkohole erhältlich ist.

6. Verfahren gemäß Anspruch 5, wobei der Polyricinolsäureester durch Polykondensation der monomeren Ricinolsäure und ein- oder mehrwertigen Alkohole in Gegenwart mindestens eines Katalysators ausgewählt aus der Gruppe bestehend aus Schwefelsäure, p-Toluolsulfonsäure, Zinn(II)-Salze und Titan(IV)-Verbindungen erhältlich ist.

7. Verfahren gemäß Anspruch 5 oder 6, wobei die ein- oder mehrwertigen Alkohole ausgewählt sind aus mindestens einem aus der Gruppe bestehend aus n-Hexanol, n-Dodecanol, n-Octadecanol, Cyclohexanol, 1,4-Dihydroxycyclohexan, 1,3-Propandiol, 2-Methylpropandiol-1,3, 1,5-Pentandiol, 1,6-Hexandiol, 1,8-Octandiol, Neopentylglykol, Diethylenglykol, Triethylenglykol, Tetraethylenglykol, Dipropylenglykol, Tripropylenglykol, Dibutylenglykol, Tripropylenglykol, Glycerin und Trimethylolpropan.

8. Verfahren gemäß einem der Ansprüche 5 bis 7, wobei der Polyricinolsäureester erhältlich ist durch Polykondensation der Ricinolsäure und der Alkoholkomponente ohne Katalysator bei einer Temperatur von $\geq$ 150 °C bis $\leq$ 250 °C, vorzugsweise $\geq$ 180 °C bis $\leq$ 230 °C und besonders bevorzugt $\geq$ 190 °C bis $\leq$ 210 °C bis die Wasserbildungsreaktion zum Erliegen gekommen ist, anschließendes hinzufügen des Katalysators und weitere Polykondensation bei einer Temperatur von $\geq$ 150 °C bis $\leq$ 250 °C, , vorzugsweise $\geq$ 180 °C bis $\leq$ 230 °C und besonders bevorzugt $\geq$ 190 °C bis $\leq$ 210 °C und Abdestillation des entstehenden Wassers, bis die Säurezahl des Reaktionsgemisches (Polyricinolsäureester) weniger als 5 mg KOH/g beträgt.

9. Verfahren gemäß einem der Ansprüche 1 bis 8, wobei der Polyricinolsäureester eine Säurezahl von weniger als 4 mg KOH/g, aufweist.

10. Verfahren gemäß einem der Ansprüche 1 bis 9, wobei die Herstellung bei einer Kennzahl von 75 bis 115 erfolgt.

11. Verfahren gemäß einem der Ansprüche 1 bis 10, wobei als Komponente B mindestens eine Verbindung ausgewählt aus der Gruppe bestehend aus 2,4-Toluylendiisocyanat, 2,6-Toluylendiisocyanat, 4,4'-Diphenylmethandiisocyanat, 2,4'-Diphenylmethandiisocyanat, 2,2'-Diphenylmethandiisocyanat und Polyphenylpolymethylenpolyisocyanateingesetzt wird.

12. Polyurethanweichschaumstoffe mit einer Rohdichte gemäß DIN EN ISO 3386-1-98 im Bereich von $\geq$ 10 kg/m$^3$ bis $\leq$ 150 kg/m$^3$ und einer Stauchhärte gemäß DIN EN ISO 3386-1-98 im Bereich von $\geq$ 0,5 kPa bis $\leq$ 20 kPa (bei 40% Verformung und 4. Zyklus) erhältlich nach einem Verfahren gemäß einem der Ansprüche 1 bis 11.

13. Verwendung von Polyricinolsäureester mit einer Hydroxylzahl von 30 mg KOH/g bis 80 mg KOH/g und einer Säurezahl von weniger als 5 mg KOH/g zur Herstellung von Polyurethanweichschaumstoffen mit einer Rohdichte gemäß DIN EN ISO 3386-1-98 im Bereich von $\geq$ 10 kg/m$^3$ bis $\leq$ 150 kg/m$^3$ und einer Stauchhärte gemäß DIN EN ISO 3386-1-98 im Bereich von $\geq$ 0,5 kPa bis $\leq$ 20 kPa (bei 40% Verformung und 4. Zyklus).

**Claims**

1. A method for producing flexible polyurethane foams with a bulk density according to DIN EN ISO 3386-1-98 in the range of $\geq$ 10 kg/m$^3$ to $\leq$ 150 kg/m$^3$ and a compressive strength according to DIN EN ISO 3386-1-98 in the range of $\geq$ 0.5 kPa to $\leq$ 20 kPa (at 40% deformation and 4th cycle) by reaction of component A comprising

A1    50 to 95 parts by weight (based on the sum of the parts by weight of components A1 and A2) of conventional polyether polyol,

A2    5 to 50 parts by weight (based on the sum of the parts by weight of components A1 and A2) of polyricinoleic acid ester with a hydroxyl value of 30 mg KOH/g to 80 mg KOH/g and an acid value of less than 5 mg KOH/g,

A3    0.5 to 25 parts by weight (based on the sum of the parts by weight of components A1 and A2) of water and/or physical blowing agents,

A4    0.05 to 10 parts by weight (based on the sum of the parts by weight of components A1 and A2) of auxiliary substances and additives such as

d) catalysts,

e) surface-active additives,

f) pigments or flame retardants,

with component B comprising polyisocyanates, wherein the production takes place at an index of 50 to 250, and wherein all data relating to parts by weight of components A1 to A5 in the present application are standardised so that the sum of the parts by weight of components A1+A2 in the composition is 100.

2. The method according to claim 1, wherein component A can additionally comprise

A5    0 to 10 parts by weight (based on the sum of the parts by weight of components A1 and A2) of compounds having hydrogen atoms capable of reacting with isocyanates having a molecular weight of 62 - 399.

3.  The method according to claim 1 or 2, wherein one or more alkylene oxide addition products of starter compounds with Zerewitinoff active hydrogen atoms are used as the conventional polyether polyol.

4.  The method according to claim 1 or 2, wherein one or more alkylene oxide addition products obtainable by reaction of at least one starter compound selected from the group consisting of propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydroquinone, pyrocatechol, resorcinol, bisphenol F, bisphenol A, 1,3,5-trihydroxybenzene and condensates of formaldehyde and phenol comprising methylol groups, condensates of formaldehyde and melamine comprising methylol groups and condensates of formaldehyde and urea comprising methylol groups, with at least one alkylene oxide selected from the group consisting of ethylene oxide, propylene oxide, 1,2-butylene oxide, 2,3-butylene oxide and styrene oxide are used as the conventional polyether polyol.

5.  The method according to one of claims 1 to 4, wherein the polyricinoleic acid ester is obtainable by polycondensation of ricinoleic acid and mono- or polyhydric alcohols.

6.  The method according to claim 5, wherein the polyricinoleic acid ester is obtainable by polycondensation of monomeric ricinoleic acid and mono- or polyhydric alcohols in the presence of at least one catalyst selected from the group consisting of sulfuric acid, p-toluenesulfonic acid, tin(II) salts and titanium(IV) compounds.

7.  The method according to claim 5 or 6, wherein the mono- or polyhydric alcohols are selected from at least one from the group consisting of n-hexanol, n-dodecanol, n-octadecanol, cyclohexanol, 1,4-dihydroxycyclohexane, 1,3-propanediol, 2-methyl-1,3-propanediol, 1,5-pentanediol, 1,6-hexanediol, 1,8-octanediol, neopentyl glycol, diethylene glycol, triethylene glycol, tetraethylene glycol, dipropylene glycol, tripropylene glycol, dibutylene glycol, tripropylene glycol, glycerol and trimethylolpropane.

8.  The method according to one of claims 5 to 7, wherein the polyricinoleic acid ester is obtainable by polycondensation of ricinoleic acid and the alcohol component without catalyst at a temperature of $\geq 150°C$ to $\leq 250°C$, preferably $\geq 180°C$ to $\leq 230°C$ and particularly preferably $\geq 190°C$ to $\leq 210°C$ until the water formation reaction has come to a stop, subsequent addition of the catalyst and further polycondensation at a temperature of $\geq 150°C$ to $\leq 250°C$, preferably $\geq 180°C$ to $\leq 230°C$ and particularly preferably $\geq 190°C$ to $\leq 210°C$, and distilling off the resulting water until the acid value of the reaction mixture (polyricinoleic acid ester) is less than 5 mg KOH/g.

9.  The method according to one of claims 1 to 8, wherein, the polyricinoleic acid ester has an acid value of less than 4 mg KOH/g.

10. The method according to one of claims 1 to 9, wherein the production takes place at an index of 75 to 115.

11. The method according to one of claims 1 to 10, wherein at least one compound selected from the group consisting of 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate and polyphenyl polymethylene polyisocyanate is used as component B.

12. Flexible polyurethane foams with a bulk density according to DIN EN ISO 3386-1-98 in the range of $\geq 10$ kg/m$^3$ to $\leq 150$ kg/m$^3$ and a compressive strength according to DIN EN ISO 3386-1-98 in the range of $\geq 0.5$ kPa to $\leq 20$ kPa (at 40% deformation and 4th cycle) obtainable by a method according to one of claims 1 to 11.

13. Use of polyricinoleic acid ester with a hydroxyl value of 30 mg KOH/g to 80 mg KOH/g and an acid value of less than 5 mg KOH/g for the production of flexible polyurethane foams with a bulk density according to DIN EN ISO 3386-1-98 in the range of $\geq 10$ kg/m$^3$ to $\leq 150$ kg/m$^3$ and a compressive strength according to DIN EN ISO 3386-1-98 in the range of $\geq 0.5$ kPa to $\leq 20$ kPa (at 40% deformation and 4th cycle).

**Revendications**

1. Procédé pour la production de mousses souples de polyuréthane ayant une densité apparente selon DIN EN ISO 3386-1-98 dans la plage de $\geq 10$ kg/m$^3$ à $\leq 150$ kg/m$^3$ et une dureté à l'écrasement selon DIN EN ISO 3386-1-98 dans la plage de $\geq 0,5$ kPa à $\leq 20$ kPa (à une déformation de 40 % et en 4 cycles) par mise en réaction d'un composant A contenant

   A1 50 à 95 parties en poids (par rapport à la somme des parties en poids des composants A1 et A2) de polyétherpolyol traditionnel,

   A2 5 à 50 parties en poids (par rapport à la somme des parties en poids des composants A1 et A2) de poly(ester d'acide ricinoléique) ayant un indice de groupes hydroxy de 30 mg de KOH/g à 80 mg de KOH/g et un indice d'acide de moins de 5 mg de KOH/g,

   A3 0,5 à 25 parties en poids (par rapport à la somme des parties en poids des composants A1 et A2) d'eau et/ou d'agent porogène physique,

   A4 0,05 à 10 parties en poids (par rapport à la somme des parties en poids des composants A1 et A2) d'adjuvants et additifs, tels que
   d) des catalyseurs,
   e) des additifs tensioactifs,
   f) des pigments ou des agents ignifuges,

   avec un composant B contenant des polyisocyanates,
   la production s'effectuant à un indice de 50 à 250, et toutes les données en parties en poids des composants A1 à A5 dans la présente demande étant normalisées de sorte que la somme des parties en poids des composants A1+A2 dans la composition est égale à 100.

2. Procédé selon la revendication 1, dans lequel le composant A peut contenir en plus

   A5 0 à 10 parties en poids (par rapport à la somme des parties en poids des composants A1 et A2) de composés comportant des atomes d'hydrogène réactifs vis-à-vis d'isocyanates, ayant une masse moléculaire de 62 - 399.

3. Procédé selon la revendication 1 ou 2, dans lequel on utilise comme polyétherpolyol traditionnel un ou plusieurs produits d'addition d'oxyde d'alkylène sur des composés de départ à atomes d'hydrogène actifs selon Zerewitinoff.

4. Procédé selon la revendication 1 ou 2, dans lequel on utilise comme polyétherpolyol traditionnel un ou plusieurs produits d'addition d'oxyde d'alkylène pouvant être obtenu(s) par mise en réaction d'au moins un composé de départ choisi dans le groupe constitué par le propylèneglycol, l'éthylèneglycol, le diéthylèneglycol, le dipropylèneglycol, le 1,2-butanediol, le 1,3-butanediol, le 1,4-butanediol, l'hexanediol, le pentanediol, le 3-méthyl-1,5-pentanediol, le 1,12-dodécanediol, le glycérol, le triméthylolpropane, la triéthanolamine, le pentaérythritol, le sorbitol, le saccharose, l'hydroquinone, le pyrocatéchol, le résorcinol, le bisphénol F, le bisphénol A, le 1,3,5-trihydroxybenzène et des produits de condensation de formaldéhyde et phénol contenant des groupes méthylol, des produits de condensation de formaldéhyde et mélamine contenant des groupes méthylol, des produits de condensation de formaldéhyde et urée contenant des groupes méthylol, avec au moins un oxyde d'alkylène choisi dans le groupe constitué par l'oxyde d'éthylène, l'oxyde de propylène, l'oxyde de 1,2-butylène, l'oxyde de 2,3-butylène et l'oxyde de styrène.

5. Procédé selon l'une quelconque des revendications 1 à 4, dans lequel le poly(ester d'acide ricinoléique) peut être obtenu par polycondensation de l'acide ricinoléique et d'alcools mono- ou polyhydriques.

6. Procédé selon la revendication 5, dans lequel le poly(ester d'acide ricinoléique) peut être obtenu par polycondensation de l'acide ricinoléique monomère et d'alcools mono- ou polyhydriques en présence d'au moins un catalyseur choisi dans le groupe constitué par l'acide sulfurique, l'acide p-toluènesulfonique, les sels d'étain(II) et les composés de titane(IV).

7. Procédé selon la revendication 5 ou 6, dans lequel les alcools mono- ou polyhydriques sont choisis parmi au moins un du groupe constitué par le n-hexanol, le n-dodécanol, le n-octadécanol, le cyclohexanol, le 1,4-dihydroxycyclohexane, le 1,3-propanediol, le 2-méthylpropanediol-1,3, le 1,5-pentanediol, le 1,6-hexanediol, le 1,8-octanediol, le néopentylglycol, le diéthylèneglycol, le triéthylèneglycol, le tétraéthylèneglycol, le dipropylèneglycol, le tripropylèneglycol, le dibutylèneglycol, le tripropylèneglycol, le glycérol et le triméthylolpropane.

8. Procédé selon l'une quelconque des revendications 5 à 7, dans lequel le poly(ester d'acide ricinoléique) peut être obtenu par polycondensation de l'acide ricinoléique et du composant alcool sans catalyseur à une température de $\geq$ 150 °C à $\leq$ 250 °C, de préférence de $\geq$ 180 °C à $\leq$ 230 °C et de façon particulièrement préférée de $\geq$ 190 °C à $\leq$ 210 °C jusqu'à ce que la réaction de formation d'eau soit achevée, addition subséquente du catalyseur et polycondensation plus poussée à une température de $\geq$ 150 °C à $\leq$ 250 °C, de préférence de $\geq$ 180 °C à $\leq$ 230 °C et de façon particulièrement préférée de $\geq$ 190 °C à $\leq$ 210 °C et élimination par distillation de l'eau résultante, jusqu'à ce que l'indice d'acide du mélange réactionnel (poly(ester d'acide ricinoléique) soit inférieur à 5 mg de KOH/g.

9. Procédé selon l'une quelconque des revendications 1 à 8, dans lequel le poly(ester d'acide ricinoléique) présente un indice d'acide de moins de 4 mg de KOH/g.

10. Procédé selon l'une quelconque des revendications 1 à 9, dans lequel la production s'effectue à un indice de 75 à 115.

11. Procédé selon l'une quelconque des revendications 1 à 10, dans lequel on utilise comme composant B au moins un composé choisi dans le groupe constitué par le 2,4-toluylènediisocyanate, le 2,6-toluylènediisocyanate, le 4,4'-diphénylméthane-diisocyanate, le 2,4'-diphénylméthanediisocyanate, le 2,2'-diphénylméthanediisocyanate et le polyphényl-polyméthylènepolyisocyanate.

12. Mousses souples de polyuréthane ayant une densité apparente selon DIN EN ISO 3386-1-98 dans la plage de $\geq$ 10 kg/m$^3$ à $\leq$ 150 kg/m$^3$ et une dureté à l'écrasement selon DIN EN ISO 3386-1-98 dans la plage de $\geq$ 0,5 kPa à $\leq$ 20 kPa (à une déformation de 40 % et en 4 cycles), pouvant être obtenues conformément à un procédé selon l'une quelconque des revendications 1 à 11.

13. Utilisation de poly(ester d'acide ricinoléique) ayant un indice de groupes hydroxy de 30 mg de KOH/g à 80 mg de KOH/g et un indice d'acide de moins de 5 mg de KOH/g, pour la production de mousses souples de polyuréthane ayant une densité apparente selon DIN EN ISO 3386-1-98 dans la plage de $\geq$ 10 kg/m$^3$ à $\leq$ 150 kg/m$^3$ et une dureté à l'écrasement selon DIN EN ISO 3386-1-98 dans la plage de $\geq$ 0,5 kPa à $\leq$ 20 kPa (à une déformation de 40 % et en 4 cycles).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0180749 A1
- EP 0000389 A
- EP 0176013 A
- EP 0007502 A
- EP 355000 A

**In der Beschreibung aufgeführte Nicht-Patentliteratur**

- Kunststoff-Handbuch. Carl-Hanser-Verlag, 1993, vol. VII, 104-127
- **W. SIEFKEN.** Justus Liebigs Annalen der Chemie. vol. 562, 75-136
- Kunststoff-Handbuch. Carl-Hanser-Verlag, 1993, vol. VII, 139-265